# EUROPÄISCHE PATENTSCHRIFT

(11) **EP 0 943 592 B1**
(45) Veröffentlichungstag und Bekanntmachung des Hinweises auf die Patenterteilung: **19.09.2001**
(21) Anmeldenummer: 98123865.2
(22) Anmeldetag: 16.12.1998
(51) Int. Cl.: C04B 33/34, F27D 5/00, B28B 11/24

(54) **Verfahren zum Trocknen und/oder Brennen von Dachziegeln**
Process for drying and/or firing of tiles
Procédé de séchage et/ou de frittage de tuiles

(30) Priorität: 18.03.1998 DE 19811898
(43) Veröffentlichungstag der Anmeldung: 22.09.1999
(73) Patentinhaber: Hans Lingl Anlagenbau und Verfahrenstechnik GmbH & Co. KG, D-89231 Neu-Ulm (DE)
(72) Erfinder: Vogel, Franz, 88267 Vogt (DE)

(56) Entgegenhaltungen:
- DE-C- 3 244 183
- DE-C- 3 538 965

## Beschreibung

Die Erfindung betrifft ein Verfahren zur Herstellung von flachen Keramikprodukten, insbesondere Dachziegeln, bei dem die Keramikformlinge auf einer schmalen Seite stehend getrocknet und/oder gebrannt werden, und einen Ofenwagen zum Trocknen und/oder Brennen von flachen Keramikprodukten, insbesondere Dachziegeln.

Es ist beispielsweise aus der DE 195 17 566 C1 bekannt, etwa Dachziegelformlinge, auf einer Schmalseite stehend zu brennen. Dazu werden gemäß der genannten Schrift die Keramikformlinge an einer Schmalseite, zum Beispiel dem nach dem Decken des Daches nicht sichtbaren Kopffalz der Dachziegel geschliffen, so daß eine Standfläche entsteht. Die Ziegel werden zum Brennen auf dem Ofenwagen auf diese geschliffene Standfläche gesetzt. Aus dem LINGL-Prospekt Nr. 92/97 "Bei Laumans stehen die Dachziegel Kopf" ist es bekannt, Dachziegel auf einem geschliffenen Kopffalz beabstandet zueinander stehend zu brennen. Nachteilig bei diesem Verfahren ist, daß sehr dünne Ziegel oder Ziegel, bei denen der Schwerpunkt außerhalb der Standfläche liegt, oder Ziegel mit einem engen Sinterinterwall, die beim Brennen schon bei geringen Übertemperaturen zum Verkrümmen neigen, nicht ausreichend sicher stehen und sich berühren können, so daß zum Beispiel Beschädigungen an einer Glasur entstehen können. Auch Erschütterungen während des Transports können zu einem Umkippen und einer gegenseitigen Berührung benachbarter Ziegel führen.

Aus der deutschen Patentschrift DE 35 38 965 C1 ist ein Verfahren und eine Vorrichtung bekannt, glasierte Dachziegel in U-Kassetten in vorbestimmbarem Abstand zueinander so zu fixieren, daß sie sich nicht berühren können, wobei eine Deckplatte mit kammartig angeordneten Noppen auf die in der U-Kassette befindlichen beabstandeten Ziegel aufgesetzt wird, so daß die Ziegel im Abstand zueinander verbleiben. Die Deckplatte wird auf der glasierten Krempe aufgesetzt, oder, wenn die Ziegel stehend gesetzt werden, auf der glasierten Kopfkante, so daß eine Beschädigung der Glasur nicht vermeidbar ist. Die Ziegel müssen zudem gruppenweise in die U-Kassette eingesetzt und gruppenweise abgedeckt werden, was eine Greiferhandhabung erfordert, die ebenfalls an glasierten Kanten angreift und diese beschädigen kann.

Aus der japanischen Patentschrift JP-194015 ist eine Vorrichtung und ein Verfahren zum Herstellen, insbesondere zum Brennen von Dachziegeln bekannt, wobei die Dachziegel auf ihrer Rückseite im Kopfbereich eine Aufhängenase zum Aufhängen der Ziegel auf Dachlatten aufweisen. Die Ziegel werden nach dem Pressen getrocknet und anschließend auf Ofenwagen durch einen Brenntunnel gefahren. Die Ziegel werden auf dem Ofenwagen auf dort installierte schräge Halteelemente, die zueinander beabstandet sind, abgelegt. Die Ziegel überragen in Länge und Breite die Halteelemente, so daß ein Zugriff durch ein Ladegerät möglich ist. Die Ziegel können sich so gegenseitig nicht berühren, auch wird durch das Ladegerät die Glasur der Ziegeloberfläche nicht beschädigt. Nachteilig ist allerdings, daß die Ziegel in Schräglage gebrannt, einen hohen Beisatzanteil zur Unterstützung erfordern, wodurch die Energieeffizient des Brennvorgangs beeinträchtigt wird. Durch die Schräglage während des Brennvorgangs kann außerdem leicht eine Verkrümmung der Ziegelformlinge auftreten. Darüberhinaus erfordert die Stützkonstruktion viel Platz, so daß die auf einem Ofenwagen transportierbare Nutzlast verringert ist.

Die DE 32 44 183 C1 offenbart eine Anlage zur kontinuierlichen Herstellung von gebrannten, plattenförmigen keramischen Formlingen, insbesondere Dachziegeln, bei der die während des Trocknens und Brennens auf dem Ofenwagen aufrechtstehenden Formlinge von auf dem Ofenwagen angebrachten Halterungen gestützt werden.

Der Erfindung liegt die Aufgabe zugrunde, eine Fixierung von senkrecht auf einer Schmalseite stehenden flachen Keramikprodukten während des Trocken- und/oder Brennvorganges zu ermöglichen, wobei die Beschädigung einer Glasur möglichst vermieden wird und ein hoher Durchsatz und eine hohe Energieeffizienz des Trocken- und/oder Brennvorganges sichergestellt wird.

Gelöst wird die Aufgabe durch das in Anspruch 1 definierte Verfahren und den in Anspruch 5 definierten Ofenwagen.

Die Keramikformlinge werden während des Trocknens und/oder Brennens seitlich in senkrecht stehender Position fixiert. Durch die senkrechte Position wird eine Verkrümmung der Ziegelformlinge während des Brennens vermieden. Die seitliche Fixierung verhindert ein Umkippen, eine Schrägstellung oder eine gegenseitige Berührung von Ziegelformlingen durch Erschütterungen des Ofenwagens. Außerdem kann zur Fixierung eine bei der späteren Verwendung der Keramikprodukte nicht sichtbare Seite, insbesondere eine nicht glasierte oder engobierte Seite des Keramikformlings gewählt werden. Die auf dem Ofenwagen seitlich fixierten Formlinge sind gut zugänglich und können daher beispielsweise durch Sauggreifer ohne Beschädigung sichtbarer, insbesondere glasierter Flächen auf den Ofenwagen geladen und von diesem wieder entnommen werden.

Handelt es sich bei den Keramikprodukten um Dachziegel, so können diese beispielsweise an den nicht glasierten und nicht sichtbaren Falzen fixiert werden.

Der erfindungsgemäße Ofenwagen weist auf einem Ofenwagensetzplateau angeordnete Kammleisten zur seitlichen Halterung der Keramikformlinge auf, die aus keramischen Material oder beispielsweise einem hochtemperaturbeständigen Stahl bestehen können und vorzugsweise mittels geeigneter Halterungen am Ofenwagen befestigt sind.

Die Erfindung wird im folgenden anhand eines bevorzugten Ausführungsbeispiels unter Bezugnahme auf die Zeichnung erläutert, in der
- Figur 1: eine schematische Seitenansicht eines beladenen erfindungsgemäßen Ofenwagens;
- Figur 2: eine Frontansicht des in Figur 1 gezeigten Ofenwagens; und
- Figur 3: eine Draufsicht auf den in Figur 1 gezeigten Ofenwagen ist.

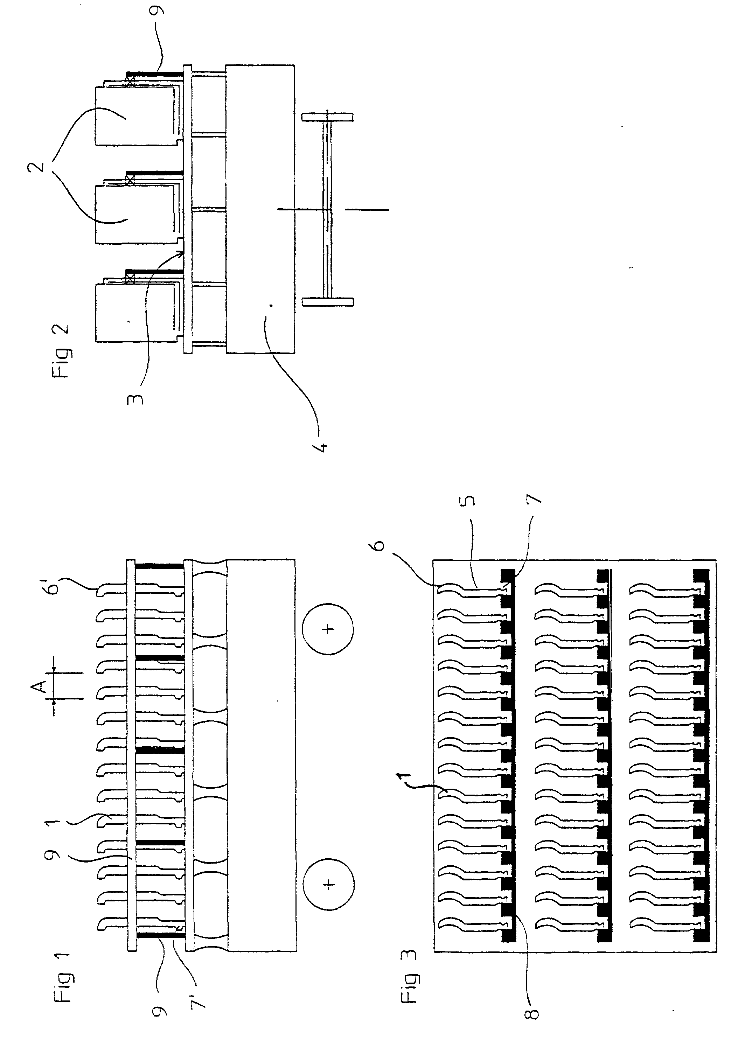

Dachziegelformlinge 1 stehen in einem festgelegten Abstand A zueinander in vorzugsweise mehreren Reihen 2 auf der Ladefläche 3 des erfindungsgemaäßen Ofenwagens 4. Der Ofenwagen weist mehrere Kammleisten 8 auf, die die Ziegelformlinge 1 seitlich in einer senkrecht stehenden Position fixieren. Die Dachziegelformlinge 1 werden dabei, wie am besten in Figur 3 gezeigt ist, an nicht glasierten Falzen 7 durch die Öffnungen zwischen den Kammvorsprüngen der Kammleiste 8 gehalten. Die Kammleiste 8 besteht beispielsweise aus haltbarem keramischen Material oder einer temperaturfesten Spezialstahllegierung und kann durch Halterungen 9 (siehe Figur 1 und 2) mit dem Ofenwagensetzplateau 3 verbunden sein. Die auf dem Dach sichtbaren Flächen 5 und Krempen 6, 6' der Dachziegel, die auch glasiert oder engobiert sein können, kommen nicht mit der Kammleiste 8 oder benachbarten Ziegelformlingen in Berührung und werden daher nicht beschädigt.

Die Formlinge 1 können zum Beispiel mit Sauggreifern, die an der Dachziegel-Rückseite (in Figur 3 jeweils linke Seite der Dachziegel) angreifen, auf den Ofenwagen gesetzt werden. Eine Beschädigung der Glasur wird so auch beim Setzvorgang auf den Ofenwagen vermieden.

Die Erfindung ermöglicht eine sichere Fixierung der flachen Keramikprodukte während des Trocknens und/oder Brennens in senkrecht auf einer schmalen Seite stehender Position. Durch die senkrechte Position wird eine Verkrümmung der Ziegelformlinge während des Brennvorgangs vermieden. Die seitliche Fixierung ermöglicht eine sichere Fixierung der Formlinge, beispielsweise auch bei Erschütterungen, wobei zur Fixierung eine später nicht sichtbare bzw. nicht glasierte oder engobierte Seite gewählt werden kann, so daß eine Beschädigung der Ziegel und/oder der Glasur vermieden werden kann. Außerdem ist eine Be- und Entladung eines Ofenwagens ohne Berührung und damit eventuelle Beschädigung der glasierten Flächen möglich.

### BEZUGSZEICHENLISTE

- 1: Dachziegelformling
- 2: Formlingsreihe
- 3: Ofenwagensetzplateau
- 4: Ofenwagen
- 5: sichtbare Fläche des Dachziegels
- 6: Krempe des Dachziegels
- 7, 7': nicht sichtbare Falze
- 8: Kammleiste
- 9: Halterung für Kammleiste

## Patentansprüche

1. Verfahren zum Trocknen und/oder Brennen von Dachziegelformlingen , wobei die Dachziegelformlinge (1) auf einer Schmalseite senkrecht stehen,
**dadurch gekennzeichnet,**
**daß** die Formlinge (1) dabei voneinander beabstandet einzeln durch eine seitlich angeordnete Kammleiste seitlich in ihrer Position gehalten und gegen ein Umkippen, eine Schrägstellung oder ein gegenseitiges Berühren fixiert werden.

2. Verfahren nach Anspruch 1,
**dadurch gekennzeichnet,**
**daß** die Dachziegelformlinge (1) vor dem Trocknen und/oder Brennen, auf einem Teil ihrer Oberfläche glasiert oder engobiert werden, und daß die Dachziegelformlinge (1) während des Trocknens und/oder Brennens auf einer nicht glasierten Schmalseite stehen und an einer nicht glasierten oder engobierten Fläche seitlich fixiert werden.

3. Verfahren nach Anspruch 2,
**dadurch gekennzeichnet,**
**daß** die Dachziegelformlinge (1) an einem nicht glasierten oder engobierten Falz (7, 7') seitlich fixiert werden.

4. Verfahren nach einem der Ansprüche 1 bis 3,
**dadurch gekennzeichnet,**
**daß** die Dachziegelformlinge (1) auf einer Schmalseite zur Bildung einer Standfläche geglättet werden.

5. Ofenwagen (4) zum Trocknen und/oder Brennen von Dachziegeln,
**gekennzeichnet durch**
wenigstens eine auf einer Ladefläche (3) des Ofenwagens (4) angeordnete Kammleiste (8) zur seitlichen Halterung der Dachziegelformlinge (1).

6. Ofenwagen nach Anspruch 5,
**dadurch gekennzeichnet,**
**daß** die Kammleiste (8) aus keramischem oder feuerfestem Material besteht.

7. Ofenwagen nach Anspruch 5 oder 6,
**dadurch gekennzeichnet,**
**daß** die Kammleiste (8) mittels Halterungen (9) am Ofenwagen (4) befestigt ist.

## Claims

1. Method for drying and / or firing of roof tile mouldings, whereas the roof tile mouldings (1) are positioned vertically on one of the small sides, **wherein**
the mouldings, arranged in distance to each other, are individually fixed in their lateral position by a laterally positioned comb rail and are therefore protected against overturning, inclination and mutual contact.

2. Method according to claim 1,
**wherein**
a part of the surfaces of the roof tile mouldings (1) is glazed or coated before drying and / or firing and the roof tile mouldings (1) are standing on a non-glazed small side and are laterally fixed on a non-glazed and non-coated surface during drying and / or firing.

3. Method according to claim 2,
**wherein**
the roof tile mouldings (1) are laterally fixed on a non-glazed or non-coated fold (7, 7').

4. Method according to any one of claims 1 to 3,
**wherein**
a small side of the roof tile mouldings (1) is smoothed to produce an even transport surface.

5. Kiln car (4) for drying and / or firing of roof tile mouldings,
**wherein**
at least one comb rail (8) is arranged on a loading area (3) of the kiln car (4) for lateral fixation of the roof tile mouldings (1).

6. Kiln car according to claim 5,
**wherein**
the comb rail (8) consists of ceramic or refractory material.

7. Kiln car according to claim 5 or 6,
**wherein**
the comb rail (8) is fixed on the kiln car (4) by fixing devices (9).

## Revendications

1. Procédé de séchage et/ou de cuisson des tuiles crues (1), les tuiles crues étant debout sur chant,
**caractérisé en ce**
**que** les tuiles crues (1) individuelles et espacées sont maintenues en position sur le côté par un listeau à peigne arrangé latéralement, et en sont fixées pour éviter un culbutage, une inclination ou un contact mutuel.

2. Procédé selon la revendication 1,
**caractérisé en ce**
**qu'**une partie de la surface des tuiles crues (1) est glacée ou engobée avant le séchage et/ou la cuisson, et que les tuiles crues (1) sont debout sur chant non-glacé durant le séchage et/ou la cuisson et sont fixées latéralement à un côté non-glacée ou non-engobé.

3. Procédé selon la revendication 2,
**caractérisé en ce**
**que** les tuiles crues (1) sont fixées latéralement à un emboîtement (7, 7') non-glacé ou non-engobé.

4. Procédé selon les revendications 1 à 3,
**caractérisé en ce**
**que** les tuiles crues (1) sont lissés sur un chant pour produire une surface sur laquelle les tuiles crues (1) sont placées debout.

5. Wagon du four (4) pour le séchage et/ou la cuisson des tuiles,
**caractérisé en ce**
**que** le wagon du four (4) comporte au moins un listeau à peigne (8) arrangé sur une surface de chargement (3) pour la fixation latérale des tuiles crues (1).

6. Wagon du four selon la revendication 5,
**caractérisé en ce**
**que** le listeau à peigne (8) consiste en matériau céramique ou réfractaire.

7. Wagon du four selon la revendication 5 ou 6,
**caractérisé en ce**
**que** le listeau à peigne (8) est fixé au wagon du four (4) par l'intermédiaire des dispositifs de fixation (9).
